## Europäisches Patentamt

## European Patent Office

## Office européen des brevets

(19)

(11) Veröffentlichungsnummer: **0 203 170 B1**

(12) # EUROPÄISCHE PATENTSCHRIFT

(45) Veröffentlichungstag der Patentschrift:
14.06.89

(21) Anmeldenummer: **86900095.0**

(22) Anmeldetag: **23.11.85**

(86) Internationale Anmeldenummer:
**PCT/EP 85/00641**

(87) Internationale Veröffentlichungsnummer:
**WO 86/03153 (05.06.86 Gazette 86/12)**

(51) Int. Cl.⁴: **B 23 Q 41/02, B 23 Q 7/14, B 23 K 37/00, B 62 D 65/00**

(54) **FLEXIBLES FERTIGUNGSSYSTEM FÜR DIE BEARBEITUNG UND HERSTELLUNG MEHRTEILIGER BAUGRUPPEN, INSBESONDERE ROHKAROSSERIE-BAUGRUPPEN.**

(30) Priorität: **26.11.84 DE 3443076**

(43) Veröffentlichungstag der Anmeldung:
**03.12.86 Patentblatt 86/49**

(45) Bekanntmachung des Hinweises auf die Patenterteilung:
**14.06.89 Patentblatt 89/24**

(84) Benannte Vertragsstaaten:
**DE IT SE**

(56) Entgegenhaltungen:
**DE-A- 3 337 374**
**US-A- 2 613 798**
**US-A- 3 796 327**
**US-A- 4 256 947**
**US-A- 4 359 305**

**Soviet Inventions Illustrated, Sektion P, Woche K07, 30. März 1983, Derwent Publications Ltd. London, (GB)**

(73) Patentinhaber: **Siemens Aktiengesellschaft Berlin und München, Wittelsbacherplatz 2, D-8000 München 2 (DE)**
Patentinhaber: **KUKA Schweissanlagen & Roboter GmbH, Blücherstrasse 144, D-8900 Augsburg (DE)**

(72) Erfinder: **VON HACHT, Werner, Danziger Strasse 22, D-8525 Uttenreuth (DE)**
Erfinder: **JAUFMANN, Franz, Schnitter Strasse 1, D-8901 Wehringen (DE)**

(74) Vertreter: **Ernicke, Hans-Dieter, Dipl.-Ing., Schwibbogenplatz 2b, D-8900 Augsburg (DE)**

**Beschreibung**

Die Erfindung bezieht sich auf ein flexibles Fertigungssystem für die Bearbeitung und Herstellung von Werkstücken, insbesondere von mehrteiligen Rohkarosserie-Baugruppen, bei dem Werkstückträger für die Aufnahme der Werkstücke einer oder mehrerer Bearbeitungsstationen, die untereinander nicht in einer Flucht linear entlang einer Fertigungslinie angeordnet zu sein brauchen, zugeführt werden, wobei die einzelne Bearbeitungsstation vor und hinter der Arbeitsposition eine Eingabestation bzw. eine Ausgabestation für die Werkstückträger aufweist, zwischen denen ein linearer Förderer für die Werkstückträger wirksam ist, wobei zusätzliche Speicherstationen mit einem zum linearen Förderer quer angeordneten Transportsystem für die Bewegung der Werkstückträger vorgesehen sind.

Ein solches flexibles Fertigungssystem ist durch die US-A-3 796 327 bekannt, bei der als Werkstückträger vorgesehene Paletten durch schienengebundene Fahrzeuge von einer zur anderen Station bewegt werden. An der Eingangsseite jeweils einer Bearbeitungsstation befindet sich eine quer zur Transferlinie sich erstreckende Speicherstation, die mehrere nebeneinander befindliche Aufnahmeplätze für jeweils eine Palette aufweist. Dadurch soll die Wartezeit für die schienengebundenen Fahrzeuge für den Fall verkürzt werden, daß sich ein kleiner Stau an Paletten vor der Bearbeitungsstation bildet.

Durch die US-A-4 256 947 ist es bekannt, die früher übliche Fertigungsstraße, welche durch eine durchgehende Transferlinie gekennzeichnet ist, aufzulösen und einzelne Bearbeitungsstationen nebeneinander anzuordnen.

Die miteinander zu verbindenden und zu verschweißenden Bauteile werden zunächst von einem Werkstückträger erfaßt, der längs einer vorgegebenen Führung mit einem geeigneten Fördermittel in die Eingabestation der einzelnen Bearbeitungsstation eingeführt wird. Von dort gelangt der Werkstückträger in eine Arbeitsposition, wo mit Hilfe von Industrierobotern Schweißvorgänge im Sinne des Heftens oder Ausschweißens vorgenommen werden. Mit Hilfe von Weichen kann die Zuordnung der geführten Werkstückträger zu einer bestimmten von mehreren nebeneinanderliegenden Bearbeitungsstationen gesteuert werden.

Wenngleich die vorbekannte Lehre ein flexibles Fertigen von Rohkarosserien zuläßt, ist aber der hierfür erforderliche Aufwand ganz erheblich, besonders was die Inanspruchnahme von Grundfläche als auch das Fördern der Werkstückträger anbelangt.

Der Erfindung liegt die Aufgabe zugrunde, die einzelne Bearbeitungsstation so zu gestalten, daß in ihr die vorgesehenen Arbeiten unabhängig von der Betriebsbereitschaft der anderen, in einer Gruppe zusammengehörigen Bearbeitungsstationen durchgeführt werden können. Außerdem wird angestrebt, die Anpassungsfähigkeit der einzelnen Bearbeitungsstationen an unterschiedliche Arbeitsschritte bei wechselnden Baugruppen weiterzuentwickeln.

Ausgehend von der US-A-3 796 327 wird die Erfindung dadurch gekennzeichnet, daß sich die jeweilige Speicherstation seitlich neben der Ein- und Ausgabestation der einzelnen Bearbeitungsstation befindet, wobei die Werkstückträger rahmenförmig ausgebildet sind, um dadurch aufeinander stapelbar zu sein, der Förderer und Transportsystem sich kreuzen und im Kreuzungsbereich mindestens eine Hubanordnung für das Stapeln der rahmenartig ausgebildeten Werkstückträger vorgesehen ist, die aufgelegte Baugruppen-Teile tragen.

Auf diese Weise wird zunächst einmal erreicht, daß die Werkstückträger nicht längs der Transferlinie in die Eingabestation eingefahren und aus der Ausgabestation herausgebracht werden müssen. Dies verkürzt wesentlich die Arbeitslänge einer einzelnen Bearbeitungsstation. Durch die Anordnung der Speicherstationen neben den Ein- und Ausgabestationen wird außerdem die Voraussetzung dafür geschaffen, daß Werkstückträger quer zur Transferlinie zu- und abgeführt und außerdem gespeichert sowie gestapelt werden können. Die Erfindung gestattet den Einsatz flurgebundener Transportfahrzeuge, die beispielsweise induktiv geführt zwischen den einzelnen Bearbeitungsstationen, Magazinen und dgl. bewegt werden können.

Derartige Transportfahrzeuge sind bei flexibel automatisierten Fertigungsanlagen beispielsweise zu dem Zweck bekannt, metallische Paletten mit darauf aufgespannten Werkstücken zwischen Palettenwechselstationen und Werkzeugmaschinen zu transportieren (VDI-Z 121; 1979; S. 83-95). Hierbei handelt es sich aber um verhältnismäßig kleine Werkstücke, was nicht ohne weiteres den Schluß zuläßt, in ähnlicher Weise im Rohkarosseriebau zu verfahren.

Eine wesentliche Steigerung der Flexibilität des erfindungsgemäßen Fertigungssystems wird dann erreicht, wenn die Werkstückträger eine Distanzier- und Zentrieranordnung aufweisen, mit deren Hilfe die Werkstückträger mit ihren Baugruppen-Teilen stapelbar sind. Hierzu empfiehlt es sich, an den Ecken der Werkstückträger aufrechte Zentrierzapfen und dazu passende Zentrierbohrungen vorzusehen, wobei die Länge der Zentrierzapfen ein Maß für den Abstand der Werkstückträger im Stapel sind, weil die Erfindung ermöglichen will, die Werkstückträger mit den von ihnen aufgenommenen Baugruppen stapeln zu können.

Dieser Grundgedanke führt erfindungsgemäß dazu, daß mindestens die Ausgabestation, bevorzugt auch die Eingabestation, mit einer der besagten Hubanordnungen für das Anheben des in der Station befindlichen Werkstückträgers ausgerüstet ist, deren die Werkstückträger untergreifenden Mitnehmer aus der Bewegungsbahn der Werkstückträger ausweichbar angeordnet ist.

Mit Hilfe dieser Konzeption gelingt es, die Zeit, in der eine Baugruppe gerade bearbeitet wird, dazu auszunutzen, den in der Aus- oder Eingabestation befindlichen Werkstückträger anzuheben, dadurch einen Stapel zu bilden und das Zuführen eines anderen Werkstückträgers unter den Stapel zu ermöglichen. Außerdem ist es mit der eingangs geschilderten Anordnung möglich, einen solchen Stapel aus der Ein- bzw. Ausgabestation seitlich in die Speicherstation zu verfahren. Mit Hilfe des vorerwähnten Transportfahrzeuges kann ein solcher Stapel von Werkstückträgern aufgenommen und in den Bereich einer anderen Bearbeitungsstation gebracht werden. Dies ist besonders dann vorteilhaft, wenn die eigentlich für den nächsten Bearbeitungsschritt vorgesehene Bearbeitungsstation eine Störung aufweist bzw. aus sonstigen Gründen nicht aufnahmebereit ist. Man kann somit die Bearbeitungsstation umgehen und die Kapazität anderer Bearbeitungsstationen auslasten.

Die Stapelbildung hat aber auch den Sinn, für eine bestimmte Anzahl von Werkstückträgern einen Puffer zu bilden, der die Fortsetzung der Produktion gewährleistet, auch wenn der Fluß der Werkstückträger von einer zur anderen Bearbeitungsstation vorübergehend unterbrochen ist.

In den Unteransprüchen sind konstruktive Vorschläge für die Gestaltung der Förderer und der Hubsysteme offenbart, aus denen hervorgeht, wie man sich kreuzende Förderstrecken auf einfachste Weise gestaltet und unabhängig von einem die Bearbeitungsstationen verbindenden Fördersystem macht.

Ein besonderer Vorteil ergibt sich dann, wenn erfindungsgemäß mehrere Bearbeitungsstationen mit ihren Transferlinien seitlich versetzt so hintereinander angeordnet sind, daß die ausgabenseitig angeordnete Speicherstation neben der Eingabestation der folgenden Bearbeitungsstation zu liegen kommt und mit ihr durch einen Querförderer verbunden ist.

Auf diese Weise können mehrere Bearbeitungsstationen konkret miteinander verkettet werden, ohne daß die einzelne Station von der anderen abhängig wäre, denn durch die Zuordnung der Speicherstationen mit den Ein- und Ausgabestationen ist nach wie vor die Möglichkeit gegeben, Bearbeitungsstationen, die gerade gestört sind, zu umgehen, indem man Stapel mit den genannten Transportwagen erfaßt und anderen aufnahmebereiten Bearbeitungsstationen zuführt.

Diese Anordnung läßt außerdem zu, im Raum unterhalb des linearen Förderers für zwei oder mehr Bautypen ausgerüstete Werkzeug-Einheiten aus Parkstellungen in die Arbeitsposition beweglich zu führen. Man kann also verschiedene Bautypen wahlweise in eine gemeinsame Bearbeitungsstation einführen. Durch eine geeignete Steuerung wird dafür gesorgt, daß die für den einzelnen Bautyp geeignete Werkzeug-Einheit aus der Parkstellung in die Arbeitsstellung überführt wird. Eine zusätzliche Platzinanspruchnahme ist hiermit nicht verbunden, weil die Parkstellungen unterhalb der Ein- und Ausgabestationen der Bearbeitungsstation zu liegen kommen können.

Einzelheiten der Erfindung ergeben sich aus der Zeichnung. In ihr ist die Erfindung schematisch und beispielsweise dargestellt.

Es zeigen:

Fig. 1 eine Draufsicht auf zwei miteinander verkettete Bearbeitungsstationen,

Fig. 2 eine Seitenansicht der Anordnung gemäß Fig. 1,

Fig. 3 eine Draufsicht auf eine Bearbeitungsstation mit sich kreuzenden Rollgängen, und

Fig. 4 eine Vorderansicht der Anordnung gemäß Fig. 3.

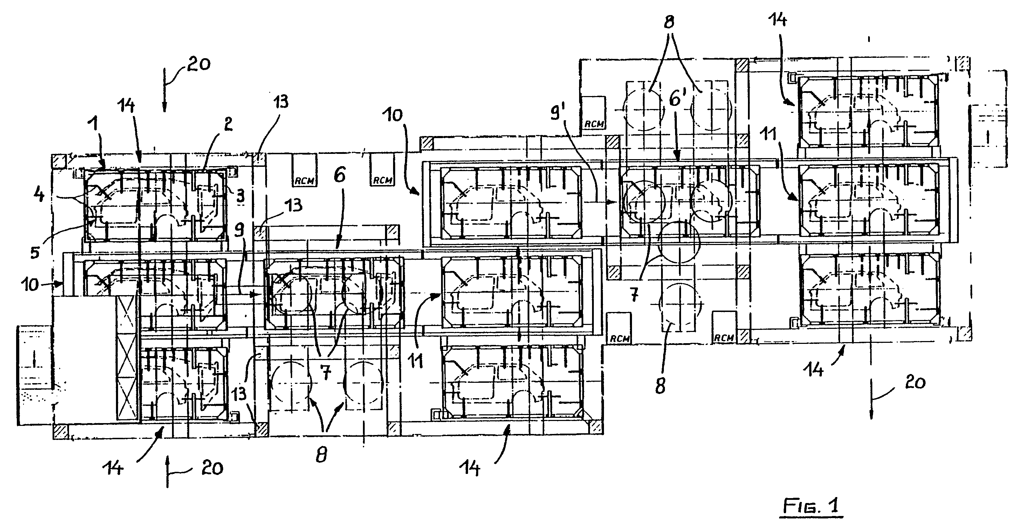

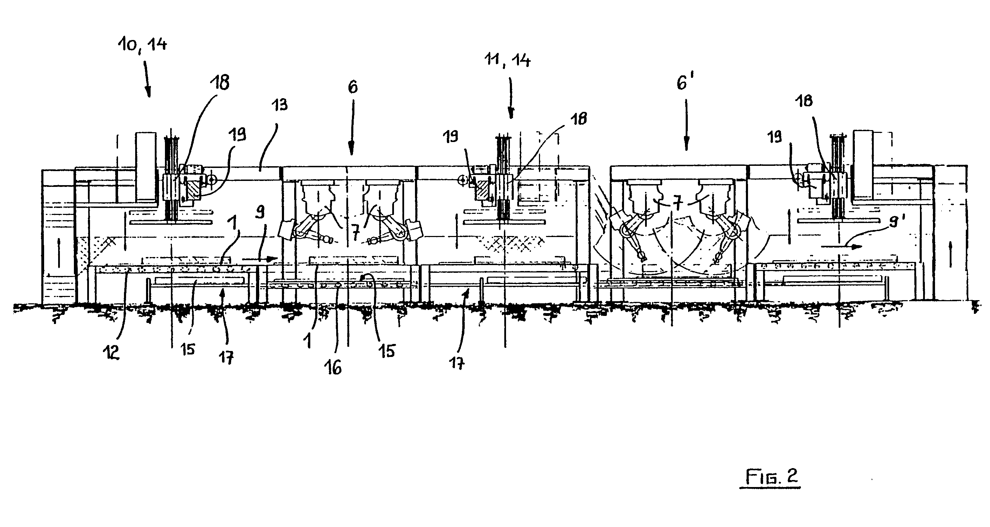

Im Ausführungsbeispiel der Fig. 1 und 2 sind zwei miteinander verkettete Bearbeitungsstationen gezeigt, die man am besten aus den seitlich voneinander versetzten Transferlinien 9 und 9' erkennen kann. Im Zentrum jeder Transferlinie 9, 9' befindet sich eine Arbeitsposition 6 und 6', die beim Ausführungsbeispiel von Industrierobotern 7 gebildet ist. Wie die Fig. 2 zeigt, ist angenommen, daß diese Industrieroboter 7 hängend angeordnet sind und von oben auf das Werkstück einwirken können.

Vor jeder Arbeitsposition 6 bzw. 6' befindet sich in der Transferlinie 9, 9' jeweile eine Eingabestation 10 für Werkstückträger 1. Ablaufseitig der Arbeitspositionen 6, 6' sind Ausgabestationen 11 in der Transferlinie 9, 9' vorgesehen.

Die Werkstückträger 1 werden nicht längs der Transferlinie 9, 9' an die Bearbeitungsstationen herangeführt und von ihnen wegbewegt. Wie vielmehr Fig. 1 zeigt, befinden sich neben den Eingabe- und Ausgabestationen 10, 11 sogenannte Speicherstationen 14, in welche die Werkstückträger 1 in Richtung des Pfeiles 20 in irgendeiner Weise eingeführt werden. Diese Pfeile 20 kennzeichnen symbolisch ein die Transferlinie 9 bzw. 9' kreuzendes Transportsystem, das dafür eingerichtet ist, die Werkstückträger 1 von den Speicherstationen 14 zur Eingabe- oder Ausgabestation 10, 11 zu bewegen bzw. diese Bewegung in umgekehrter Richtung zu vollziehen.

Der einzelne Werkstückträger 1 ist rahmenartig gestaltet. Er weist zwei zueinander parallele Längsholme 2 auf, die durch Querholme 3 miteinander verbunden sind. Von diesen Holmen 2, 3 ragen mehrere Auflegestege 14 in den freien Innenraum des Werkstückträgers. Sie sind dazu bestimmt, die Einzelteile von Baugruppen 5 lose aufzunehmen. Beim Ausführungsbeispiel der Fig. 1 handelt es sich um eine Seitenwandbaugruppe für einen Personenkraftwagen, wobei davon ausgegangen wird, daß diese Bauteile der Baugruppe 5 spätestens in der Arbeitsposition 6 mechanisch oder manuell in die korrekte Arbeitsstellung gebracht und dort mit Schweißpunkten fixiert werden. In der Arbeitsposition 6' soll dann das Ausschweißen der miteinander verbundenen Bauteile erfolgen.

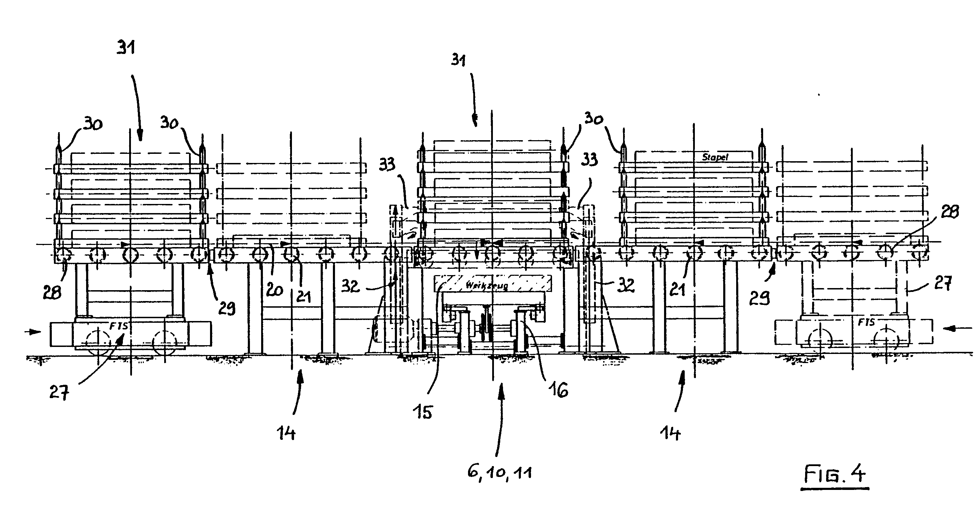

Das Heranbringen des Werkstückträgers 1 an eine der beiden vorderen Speicherstationen 14 kann beispielsweise mit Hilfe eines selbstfahrenden Transportfahrzeuges erfolgen, das schienengebunden oder induktiv geführt, möglicherweise aber auch lenkbar ausgerüstet sein kann. Jedenfalls soll dieses Transportfahrzeug, welches in Fig. 4 mit 27 in einer Ausführungsform dargestellt ist, in der Lage sein, den Werkstückträger, der im Bereiche eines Magazins mit der Baugruppe 5 bestückt worden ist, mit Hilfe des kreuzenden Transportsystems 20 zunächst in die Speicherstation 14 von der Seite her und danach in die Eingabestation 10 zu bringen. Wie die Fig. 2 zeigt, kann hierfür ein Übersetzer 18 eingesetzt werden, der längs einer Traverse 19 quer zur Transferlinie 9 beweglich sein kann sowie einen vertikalen Hub zu erzeugen in der Lage ist. Dieser Übersetzer kann beispielsweise den Werkstückträger 1 von einem Transportwagen in die Speicherstation 14 und von dort in die Eingabestation 10 überführen. Es ist aber auch denkbar, daß ein Werkstückträger 1 in der Speicherstation 14 bereits vorhanden ist und dort mit der Baugruppe 5 bestückt wird, die mittels des Übersetzers 18 heranbewegt wird.

Sobald der Werkstückträger 1 mit der Baugruppe 5 in die Eingabestation 10 querversetzt worden ist, wird der Werkstückträger 1 mit Hilfe des linearen Förderers 12, der schematisch in Fig. 2 dargestellt ist, aus der Eingabestation 10 in die Arbeitsposition 6 eingeführt. Dort wird eine Werkzeug-Einheit (Unterbau) 15 in Arbeitsposition gebracht. Bei diesem Ausführungsbeispiel ist davon ausgegangen, daß diese Werkzeug-Einheit 15 unterhalb des linearen Förderers 12 mit Hilfe eines eigenen Förderers 16 hin- und herbewegbar ist und mehrere Werkzeug-Baugruppen enthalten kann, von denen jede einem bestimmten Typ einer Baugruppe zugeordnet werden kann. Wie die Fig. 2 zeigt, kann die Werkzeug-Einheit 15 aus der Position der Eingabestation 10 bis zur Position der Ausgabestation 11 transportiert werden, so daß die Möglichkeit besteht, nach Wahl eines der Werkzeug-Einheiten 15 in die Arbeitsposition 6 und die andere Werkzeug-Einheit 15 in die Parkstellung 17 zu bringen.

In Fig. 2 ist ferner angedeutet, daß der Werkstückträger 1 in der Arbeitsposition 6 abgesenkt worden ist. Dies kann beispielsweise dadurch geschehen, daß ein Teil des linearen Förderers 12 bzw. 16 heb- und senkbar ausgebildet ist.

Die in der Arbeitsposition 6 bzw. 6' befindlichen Industrieroboter 7 können quer zur Transferlinie 9, 9' längs am Gestell 13 befindlicher Führungen bewegt werden, wobei mit 8 eine Wartungsstellung für diese Industrieroboter 7 symbolisch bezeichnet ist. In dieser Wartungsstellung 8 kann auch ein Magazin für verschiedene Werkzeuge vorhanden sein, welche der Industrieroboter nach Bedarf automatisch zu wechseln in der Lage ist.

Der mit der bearbeiteten Baugruppe 5 versehene Werkstückträger 1 gelangt aus der Arbeitsposition 6 in die Ausgabestation 11, wo der weitere Weg des Werkstückträgers 1 wahlweise abgezweigt werden kann. Wenn sich die folgende Bearbeitungsstation mit der Arbeitsposition 6' in Aufnahmebereitschaft befindet, wird der Werkstückträger aus der Ausgabestation 11 mit Hilfe eines kreuzenden Transportsystems 18, 20 in die Eingabestation 10 der folgenden Bearbeitungsstation versetzt und dort längs der Transferlinie 9' in die Arbeitsposition 6' überführt.

Wenn aber die Bearbeitungsstation mit der Arbeitsposition 6' nicht aufnahmefähig ist, was beispielsweise durch unterschiedlich lange Arbeitszeiten, durch eine Störung oder dgl. erfolgen kann, dann soll die vorangegangene Bearbeitungsstation mit der Arbeitsposition 6 nicht stillgesetzt werden müssen. In diesem Falle wird nämlich der in der Ausgabestation 11 befindliche Werkstückträger mit Hilfe des kreuzenden Transportsystems 18, 20 in die Speicherstation 14 überführt, wo dann entschieden wird, ob der Werkstückträger 1 dort gespeichert bleibt oder von einem Transportfahrzeug 27 gemäß Fig. 4 aufgenommen wird. Es ist nämlich durch diese Aufnahme des Werkstückträgers 1 die Möglichkeit gegeben, die nicht aufnahmefähige oder gestörte Bearbeitungsstation zu umgehen und den Werkstückträger mit der Baugruppe 5 einer anderen, noch aufnahmefähigen Bearbeitungsstation zuzuführen.

Das flexible Fertigungssystem geht davon aus, daß durch eine geeignete Steuerung und durch die Fähigkeit der Industrieroboter, einen Werkzeugwechsel automatisch zu vollziehen, verhältnismäßig einfach eine Auffangstation angefahren werden kann, die dann die unterschiedlichsten Arbeiten durchzuführen in der Lage ist, wenn im normalen Fluß der Werkstückträger 1 eine Störung eintritt. Auf diese Weise können die ungestörten Bearbeitungsstationen ungehindert weiterarbeiten, was eine erhebliche Leistungssteigerung zur Folge hat.

Es versteht sich von selbst, daß die der Arbeitsposition 6' nachfolgende Ausgabestation 11 wiederum mit einer seitlich davon befindlichen Speicherstation 14 ausgerüstet werden kann. Der Anschluß weiterer Bearbeitungsstationen ist möglich, wobei der stufenartige Versatz der Transferlinien 9, 9' nicht unbedingt notwendig ist, sofern neben einer Ausgabestation 11 eine Speicherstation 14 sich befindet, die das seitliche Entnehmen des Werkstückträgers 1 gestattet.

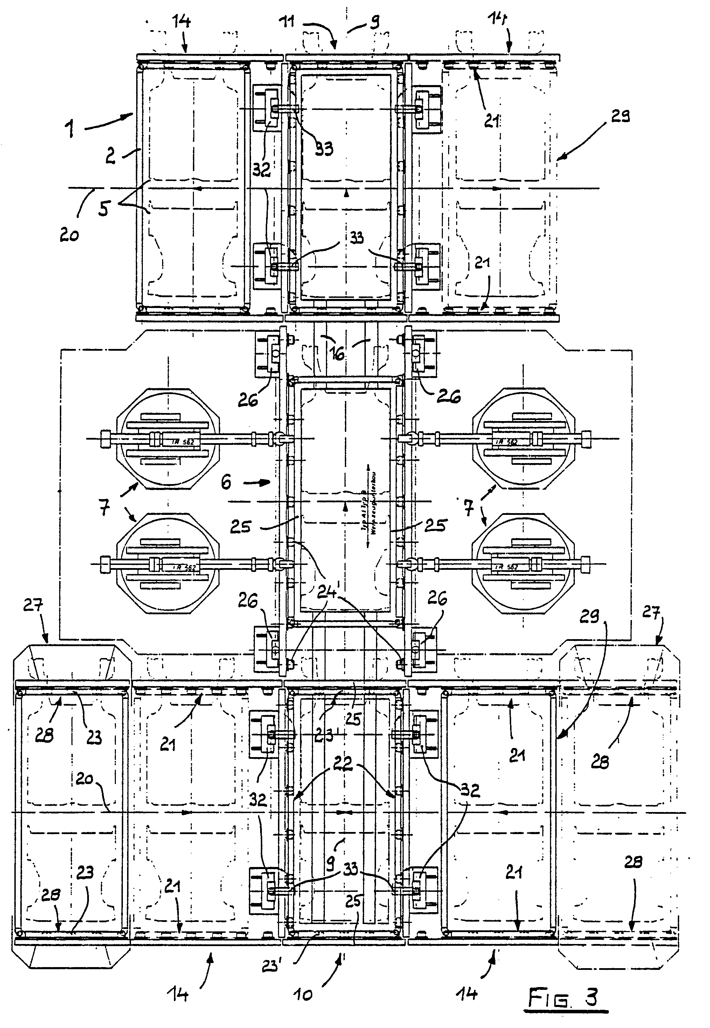

Das Beispiel der Fig. 3 und 4 enthält eine zusätzliche Vereinfachung und andere konstruktive Gestaltung als das vorerwähnte Beispiel der Fig. 1 und 2.

Es ist zunächst davon ausgegangen, daß das kreuzende Transportsystem 20 durch Rollgänge 21 gebildet ist, die eine Vielzahl fliegend gelagerter Führungsrollen 23, 23' aufweisen, welche am Gestell 13 der Anordnung gelagert sind. Der Abstand einander gegenüberliegender Führungsrollen 23 entspricht dabei genau dem Abstand der Querholme 3 voneinander, so daß sichergestellt ist, daß der Werkstückträger 1 mit seinen Querholmen 3 auf diesem Rollgang 21 geführt beweglich ist.

Wie die Fig. 3 und 4 weiterhin zeigen, weist das Transportfahrzeug 27 einen ebensolchen Rollgang 28 auf, der die Möglichkeit vermittelt, den auf dem Transportfahrzeug 27 befindlichen Werkstückträger 1 über die Übergabeposition 29 hinweg in die Speicherstation 14 zu bewegen.

Der Rollgang 22, welcher die Eingabestation 10 über die Arbeitsposition 6 mit der Ausgabestation 11 längs der Transferlinie 9 verbindet, ist ebenfalls mit solchen fliegend gelagerten Führungsrollen 24 ausgerüstet, deren Abstand dem Abstand der Längsholme 3 der Werkstückträger entspricht.

Hierbei muß natürlich sichergestellt werden, daß der Werkstückträger 1 während des Überganges vom Rollgang 21 auf den Rollgang 22 nicht in seiner Bewegung gehindert werden darf. Aus diesem Grunde befinden sich die Führungsrollen 23' des Rollganges 21 an Trägern 25, die mittels Hubvorrichtungen höhenverstellbar sind. Man kann also die in der Eingabestation 10 befindlichen Führungsrollen 23' absenken, um dadurch den Werkstückträger 1 auf die etwas tiefer gelegenen Führungsrollen 24 des Rollganges 22 abzusetzen. Hat der Werkstückträger 1 seine ordnungsgemäße Position in der Eingabestation 10 erreicht, werden die Träger 25 mit den Führungsrollen 23' noch weiter abgesenkt, um nun den Werkstückträger 1 aus der Eingabestation 10 in die Arbeitsposition 6 mit Hilfe des Rollganges 22 einführen zu können.

Wie Fig. 4 zeigt, befindet sich die Werkzeug-Einheit 15 unterhalb der Rollgänge 21, 22. Damit wird die Werkzeug-Einheit 15 in die Lage versetzt, aus der Arbeitsposition 6 wahlweise in die Position unter der Eingabestation 10 oder der Ausgabestation 11 verfahren zu werden, was wiederum den Einsatz von für unterschiedliche Bautypen passende spezielle Werkzeuge ermöglicht.

Dies bedingt aber, daß der Werkstückträger 1 in der Arbeitsposition 6 absenkbar ausgebildet sein sollte, damit die Werkzeuge der Werkzeuggruppe 15 die auf dem Werkstückträger 1 aufgelegte Baugruppe 5 erfassen und untergreifen kann. Auch diese Senkbewegung kann durch Hubvorrichtungen 26 im Bereiche der Arbeitsposition 6 durchgeführt werden, die auf Träger 25 einwirken, an denen die höhenverstellbaren Führungsrollen 24 gelagert sind.

Wie die Fig. 4 zeigt, sind die Werkstückträger 1 beim Ausführungsbeispiel der Erfindung stapelbar ausgebildet. Dies wird beispielsweise dadurch ermöglicht, daß in den Eckbereichen der Werkstückträger 1 Distanzier- und Zentrieranordnungen 30, beispielsweise in Form aufrechter Zentrierbolzen, vorgesehen sind, die sich vom Werkstückträger 1 nach oben erstrecken. Folglich ist an der Unterseite an gleicher Stelle eine Zentrierbohrung vorgesehen, in welche die Bolzen eingreifen können. Die Länge der Bolzen ist ein Maß dafür, wie hoch die Baugruppe 5 sein darf, denn selbstverständlich will die Erfindung erreichen, daß die Werkstückträger 1 mit ihren Baugruppen 5 stapelbar sein sollen.

Beim Ausführungsbeispiel der Fig. 3 und 4 wird die Stapelbildung im Bereiche der Eingabestation 10 und/oder der Ausgabestation 11 herbeigeführt. Zu diesem Zweck sind Hubanordnungen 32 mit ausschwenkbaren Mitnehmern 33 vorgesehen. Diese Mitnehmer 33 sollen von unten her die Längsholme 2 der Werkstückträger 1 erfassen. Ein beispielsweise in der Ausgabestation 11 in normaler Stellung befindlicher Werkstückträger 1 wird folglich über die Hubvorrichtung 32, 33 angehoben, damit ein anderer Werkstückträger 1 aus der Arbeitsposition 6 in die Ausgabestation 11 längs des Rollganges 22 überführt werden kann. Die in Fig. 3 dargestellte Bearbeitungsstation ist somit in der Lage, eine Vielzahl von Baugruppen 5 zu bearbeiten, ohne daß der Weitertransport der mit diesen Baugruppen 5 verbundenen Werkstückträger 1 in die nächste Bearbeitungsstation erfolgen muß. Es ist vielmehr die Möglichkeit gegeben, einen Stapel 31 mehrerer Werkstückträger 1 aus der Ausgabestation 11 seitlich in die Speicherstation 14 mit Hilfe des Rollganges 21 zu überführen, von wo der Stapel 31 mit Hilfe eines Transportfahrzeuges 27 übernommen und in der vorher geschilderten Weise anderen Bearbeitungsstationen oder Magazinen zugeführt werden kann.

Der Stapel 31 kann aber auch in der Speicherstation 14 vorübergehend verbleiben, nämlich so lange, bis die Störung in der nachfolgenden Bearbeitungsstation beseitigt ist. Dann kann man den Stapel 31 aus der Speicherstation 14 wieder rückwärts in die Ausgabestation 11 und von dort entsprechend Fig. 1 in die Eingabestation der nächstfolgenden Bearbeitungsstation überführen.

Es ist also erkennbar, daß die in den Fig. 1 und 3 in verschiedenen Beispielen dargestellten Zuordnungen einzelner Stationen die Voraussetzung dafür bilden, in einer steuertechnisch beherrschbaren Weise flexibel zu fertigen.

## Patentansprüche

1. Flexibles Fertigungssystem für die Bearbeitung und Herstellung von Werkstücken, insbesondere von mehrteiligen Rohkarosserie-Baugruppen, bei dem Werkstückträger (1) für die Aufnahme der Werkstücke einen oder mehreren Bearbeitungsstationen, die untereinander nicht in einer Flucht linear entlang einer Fertigungslinie (9) angeordnet zu sein brauchen, zugeführt werden, wobei die einzelne Bearbeitungsstation vor und hinter der Arbeitsposition (6) eine Eingabestation (10) bzw. eine Ausgabestation (11) für die Werkstückträger (1) aufweist, zwischen denen ein linearer Förderer (12) für die Werkstückträger (1) wirksam ist, wobei zusätzliche Speicherstationen (14) mit einem zum linearen Förderer (12) quer angeordneten Transportsystem (20) für die Bewegung der Werkstückträger (1) vorgesehen sind, dadurch gekennzeichnet, daß sich die jeweilige Speicherstation (14) seitlich neben der Ein- und Ausgabestation (10, 11) der einzelnen Bearbeitungsstation befindet, wobei die Werkstückträger (1) rahmenförmig ausgebildet sind, um dadurch aufeinander stapelbar zu sein, der Förderer (12) und das Transportsystem (20) sich kreuzen und im Kreuzungsbereich mindestens eine Hubanordnung (32) für das Stapeln der rahmenartig ausgebildeten Werkstückträger (1) vorgesehen ist, die aufgelegte Baugruppen-Teile tragen.

2. Fertigungssystem nach Anspruch 1, dadurch gekennzeichnet, daß die Werkstückträger (1) eine Distanzier- und Zentrieranordnung (30) aufweisen, mit deren Hilfe die Werkstückträger (1) mit ihren Baugruppen-Teilen (5) stapelbar sind.

3. Fertigungssystem nach Anspruch 1 oder 2, dadurch gekennzeichnet, daß mindestens die Ausgabestation (11), bevorzugt auch die Eingabestation (10), mit einer der besagten Hubanordnungen (32) für das Anheben des in der Station befindlichen Werkstückträgers (1) ausgerüstet ist, deren die Werkstückträger (1) untergreifenden Mitnehmer (33) aus der Bewegungsbahn der Werkstückträger (1) ausweichbar angeordnet sind.

4. Fertigungssystem nach Anspruch 1 oder einem der folgenden, dadurch gekennzeichnet, daß der lineare Förderer (12) und das den Förderer (12) kreuzende Transportsystem (20) als Rollgänge (21, 22) ausgebildet sind, welche eine Vielzahl fliegend gelagerter Führungsrollen (23, 24) in einer solchen Anordnung aufweisen, daß die jeweils gegenüberliegenden Rahmenholme (2, 3) der Werkstückträger (1) auf den Führungsrollen (23, 24) aufsitzen und längs der Rahmenholme (2, 3) geführt sind.

5. Fertigungssystem nach Anspruch 4, dadurch gekennzeichnet, daß die Führungsrollen (23, 24) der Rollgänge (21, 22) zueinander unterschiedlich hohe Führungsebenen bilden, in deren Kreuzungsbereich einzelne Gruppen (23') solcher Führungsrollen auf das Niveau der anderen Führungsrollen (24) höhenverstellbar sind.

6. Fertigungssystem nach Anspruch 5, dadurch gekennzeichnet, daß die höhenverstellbaren Führungsrollen (23', 24') der einzelnen Rollgänge (21, 22) an parallel zur Förderrichtung (9, 20) sich erstreckenden Trägern (25) gelagert und die Träger (25) mit Hubvorrichtungen (26) verbunden sind.

7. Fertigungssystem nach Anspruch 1 oder einem der folgenden, dadurch gekennzeichnet, daß mit Eigenantrieb versehene Transportfahrzeuge (27) einen Querförderer (28) aufweisen, der dem Transportsystem (20, 21) der Speicherstationen (14) angepaßt und dafür eingerichtet ist, einen Wechsel eines Werkstückträgers (1) oder eines Stapels (31) von der Speicherstation (14) zum Transportfahrzeug (27) bzw. in umgekehrter Richtung zu veranlassen.

8. Fertigungssystem nach Anspruch 1 oder einem der folgenden, dadurch gekennzeichnet, daß mehrere Bearbeitungsstationen mit ihren Transferlinien (9, 9') seitlich versetzt so hintereinander angeordnet sind, daß die ausgabenseitig angeordnete Speicherstation (14) neben der Eingabestation (10) der folgenden Bearbeitungsstation (6') zu liegen kommt und mit ihr durch einen Querförderer (20, 21) verbunden ist.

9. Fertigungssystem nach Anspruch 1 oder einem der folgenden, dadurch gekennzeichnet, daß im Raum unterhalb des linearen Förderers (12) für zwei oder mehr Bautypen ausgerüstete Werkzeug-Einheiten (15) aus Parkstellungen (17) in die Arbeitsposition (6, 6') beweglich geführt sind.

## Claims

1. Flexible manufacturing system for the machining and production of work-pieces, in particular of multi-part unfinished bodywork components, in which work-piece holders (1) for receiving work-pieces are supplied to one or more machining stations, which need to be arranged one below the other not in a row in a linear manner along a production line (9), the individual machining station in front of and behind the working position (6) comprising a feed station (10) or a discharge station (11) for the work-piece holders (1), between which a linear conveyor (12) for the work-piece holders (1) is operative, additional storage stations (14) with a transport system (20) arranged transversely to the linear conveyor (12), for the movement of the work-piece holders (1) being provided, characterised in that the respective storage station (14) is located laterally beside the feed and discharge station (10, 11) of the individual machining stations, the work-piece holders (1) being constructed in the form of a frame, in order to be stackable as a consequence thereof, the conveyor (12) and the transport system (20) intersect and at least one lifting arrangement (32) for stacking the work-piece holders (1) constructed in the form of a frame is provided in the intersection region, which work-piece holders carry the loaded component parts.

2. Manufacturing system according to Claim 1, characterised in that the work-piece holders (1) comprise a spacing and centering arrangement (30), with the assistance of which the work-piece holders (1) with their component groups (5) are stackable.

3. Manufacturing system according to Claim 1 or 2, characterised in that at least the discharge station (11), preferably also the feed station (10), is equipped with one of the said lifting arrangements (32) for lifting the work-piece holder (1) located in the station, whereof the entrainment means (33) engaging below the work-piece holder (1) are arranged to be withdrawable from the path of movement of the work-piece holder (1).

4. Manufacturing system according to Claim 1 or one of the following, characterised in that the linear conveyor (12) and the transport system (20) intersecting the conveyor (12) are constructed as roller beds (21, 22), which comprise a plurality of overhung guide rollers (23, 24) in such an arrangement that the respective opposed frame side bars (2, 3) of the work-piece holders (1) are seated on the guide rollers (23, 24) and guided along the frame side bars (2, 3).

5. Manufacturing system according to Claim 4, characterised in that the guide rollers (23, 24) of the roller beds (21, 22) form guide planes of different height with respect to each other, in the intersection region of which individual groups (23') of such guide rollers are vertically adjustable to the level of the other guide rollers (24).

6. Manufacturing system according to Claim 5, characterised in that the vertically adjustable guide rollers (23', 24') of the individual roller beds (21, 22) are mounted on supports (25) extending parallel to the conveying direction (9, 20) and the supports (25) are connected to lifting devices (26).

7. Manufacturing system according to Claim 1 or one of the following, characterised in that transport vehicles (27) provided with their own drive comprise a transverse conveyor (28), which is adapted to the transport system (20, 21) of the storage stations (14) and is arranged to bring about an exchange of a work-piece holder (1) or a stack (31) from the storage station (14) to the transport vehicle (27) or in the opposite direction.

8. Manufacturing system according to Claim 1 or one of the following, characterised in that several machining stations with their transfer lines (9, 9') are arranged laterally offset one behind the other so that the storage station (14) located at the discharge side comes to lie beside the feed station (10) of the following machining station (6') and is connected thereto by a transverse conveyor (20, 21).

9. Manufacturing system according to Claim 1 or one of the following, characterised in that in the space below the linear conveyor (12), tool units (15) equipped for two or more structural types are guided to move from parked position (17) into the working position (6, 6').

## Revendications

1. Système souple de fabrication pour l'usinage et la fabrication de pièces à usiner, notamment de modules de coques en plusieurs éléments, dans lequel des porte-pièces (1) servant à recevoir des pièces à usiner sont envoyés à un ou plusieurs postes d'usinage, qui n'ont pas besoin d'être disposés de manière à être alignés entre eux linéairement le long d'une chaîne de fabrication (9), et dans lequel chaque poste d'usinage comporte, en amont et en aval de la position de travail (6), un poste d'entrée (10) et une poste de sortie (11) pour les porte-pièces (1), entre lesquels agit un convoyeur linéaire (12) pour les porte-pièces (1), et dans lequel il est prévu des postes supplémentaires d'accumulation (14) comportant un système de transport (20) disposé transversalement par rapport au convoyeur linéaire (12) et servant à déplacer les porte-pièces (1), caractérisé par le fait que le poste respectif d'accumulation (14) est disposé latéralement à côté des postes d'entrée et de sortie (10, 11) de chaque poste d'usinage, les porte-pièces (1) étant réalisés sur la forme de cadres de manière à être empilables les uns sur les autres, tandis que le convoyeur (12) et le système de transport (20) se croisent, et qu'il est prévu, dans la zone de croisement, au moins un dispositif de levage (32) effectuant l'empilage des porte-pièces (1) réalisés en forme de cadres, qui portent les éléments des modules.

2. Système de fabrication suivant la revendication 1, caractérisé par le fait que les porte-pièces (1) possèdent un dispositif d'écartement et de centrage (30), permettant d'empiler les porte-pièces (1) munis de leurs éléments de modules (5).

3. Système de fabrication suivant la revendication 1 ou 2, caractérisé par le fait qu'au moins le poste de sortie (11) est équipé de l'un desdits dispositifs de levage (32), qui sert à soulever le porte-pièces (1) situé dans le poste et dont les organe d'entraînement, qui s'engagent au-dessous des porte-pièces (1), sont disposés de manière à pouvoir être dégagés de la voie de déplacement des porte-pièces (1).

4. Système de fabrication suivant la revendication 1 ou l'une des suivantes, caractérisé par le fait que le convoyeur linéaire (12) et le système de transport (20), qui croise le convoyeur (12), sont réalisés sous la forme de tables à rouleaux (21, 22), qui comportent une multiplicité de rouleaux de guidage (23, 24) montés flottants et disposés de telle manière que les longerons (2, 3), disposés respectivement en vis-à-vis, des cadres des porte-pièces (1) reposent sur les rouleaux de guidage (23, 24) et sont guidés le long des longerons (2, 3) des cadres.

5. Système de fabrication suivant la revendication 4, caractérisé par le fait que les rouleaux de guidage (23, 24) des tables à rouleaux (21, 22) forment des plans de guidage, qui sont situés à des hauteurs différentes et dans la zone de croisement desquels, des groupes individuels (23') de tels rouleaux de guidage sont réglables en hauteur de manière à être amenés au niveau des autres rouleaux de guidage (24).

6. Système de fabrication suivant la revendication 5, caractérisé par le fait que les rouleaux de guidage (23', 24') réglables en hauteur, des différentes tables à rouleaux (21, 22) sont montés sur des supports (25) parallèles à la direction de transport (9, 20) et que les supports (25) sont reliés à des dispositifs de levage (26).

7. Système de fabrication suivant la revendication 1 ou l'une des suivantes, caractérisé par le fait que des véhicules de transport (27) équipés de leurs propres dispositifs d'entraînement, possèdent un convoyeur transversal (28), qui est adapté au système de transport (20, 21) des postes d'accumulation (14) et est agencé de manière à déclencher un transfert d'un porte-pièce (1) ou d'une pile (31) depuis le poste d'accumulation (14) en direction du véhicule de transport (27) ou dans la direction inverse.

8. Système de fabrication suivant la revendication 1 ou l'une des suivantes, caractérisé par le fait que plusieurs postes d'usinage équipés de leurs lignes de transfert (9, 9') sont disposés les uns derrière les autres en étant décalés latéralement de sorte que le poste d'accumulation (14) disposé sur le côté sortie vient se situer à côté du poste d'entrée (10) du poste d'usinage suivant (6') et est relié à ce dernier par un convoyeur transversal (20, 21).

9. Système de fabrication suivant la revendication 1 ou l'une des suivantes, caractérisé par le fait que des unités porte-outils (15), équipées pour deux ou plusieurs types de réalisation, sont guidées en déplacement, dans l'espace situé au-dessous du convoyeur linéaire (12), depuis des positions de parcage (17) jusque dans la position de travail (6, 6').

EP 0 203 170 B1

Fig. 1

Fig. 2

EP 0 203 170 B1

FIG. 3

Fig. 4